# EUROPEAN PATENT SPECIFICATION

(11) **EP 2 433 775 B1**
(45) Date of publication and mention of the grant of the patent: **13.11.2013**
(21) Application number: 11179576.1
(22) Date of filing: 31.08.2011
(51) Int. Cl.: B29C 45/48, B29C 45/52

(54) **Injection apparatus for an injection molding machine**
Einspritzvorrichtung für eine Spritzgießmaschine
Appareil d'injection pour machine de moulage par injection

(30) Priority: 31.08.2010 CN 201010274009
(43) Date of publication of application: 28.03.2012
(73) Proprietor: Chen Hsong Asset Management Limited, Hong Kong (CN)
(72) Inventor: Zhang, Xian Bao, Foshan City (CN); Zhang, Fan, Foshan City (CN); Zhao, Ze Bo, Foshan City (CN)
(74) Representative: Vogel, Andreas

(56) References cited:
- EP-A1- 1 013 397
- DE-A1- 2 201 404
- JP-A- 8 300 429
- JP-A- 9 104 029
- JP-A- 62 013 313
- JP-A- 63 109 028
- JP-A- 2000 061 992
- US-A- 5 123 833

## Description

### Field of the Invention

The invention relates to an injection molding machine, and particularly, relates to an injection apparatus for an injection molding machine.

### Background of the Invention

An injection apparatus for an injection molding machine functions in an injection molding cycle to evenly melt and plasticize plastics of a prescribed amount to a molding temperature within a prescribed time interval, to inject the resulting molten materials into the mold cavity under a certain pressure and at a certain velocity, and to perform pressure holding on the molten materials that have been injected into the mold cavity.

As a commonly-used injection apparatus, a preplasticizing type injection apparatus first stores a certain amount of molten materials in a storage chamber, and then injects the stored molten materials into the mold cavity by means of a plunger or a screw. Currently, the most commonly-used preplasticizing type injection apparatus can be classified into three categories.

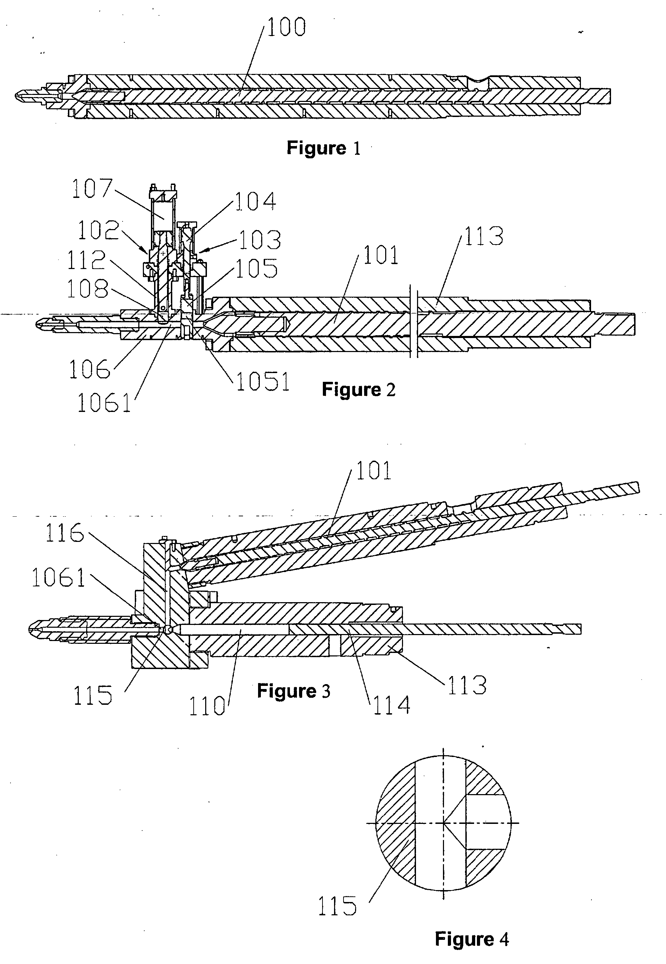

The first category, the so-called in line injection type as shown in Fig. 1, is most widely used currently. A screw 100, after plasticizing, directly pushes the molten materials to perform injection. After completion of injection, pressure holding is implemented through the system pressure. And after completion of pressure holding, the screw withdraws and then performs plasticizing. In this way a whole injection molding cycle is finished. The apparatus of this category leads to a low plasticizing rate and thus a poor production efficiency due to poor synchronism and a longer cycle time that result from the fact that each step can only be performed when the previous step is finished.

The second category is implemented based on the first category by additionally providing a pressure holding device 102 and a shut-off nozzle device 103. As shown in Fig. 2, after plasticizing, injection is implemented with the shut off nozzle being open. And after completion of injection, the hydraulic cylinder 104 in the shut off nozzle device 103 drives the plunger 105 to move upwards such that the passage hole 1051 of the plunger misaligns with the injection passage 1061 of the flange 106, in this way the shut off nozzle (116) is closed. The hydraulic cylinder 107 of the pressure holding device 102 pushes the piston 108 to move downwards so as to hold pressure and supplement materials. Meanwhile the injection screw 101 may perform plasticizing synchronously. After completion of plasticizing, the hydraulic cylinder 104 drives the plunger 105 to move downwards so as to open the injection passage 1061 to prepare for a next injection. In this way, a whole injection molding, cycle is finished.

The third category is of a parallel structure as shown in Fig. 3. In this structure, the functions of plasticizing and injection are implemented by two units instead of one unit, that is, plasticizing is performed by the independent movement of the screw 101 and injection is performed by the plunger 114 independently. In this way, the screw 101 in the upper portion is mainly used for plasticizing and the plunger 114 in the lower portion is mainly used for injection. The switching valve 115 (as shown in Fig. 4) is used to open or close the injection passage 1061. When the shut off nozzle 116 is closed, the plunger 114 may perform injection. Upon completion of injection, pressure holding is performed; meanwhile the plasticizing screw 101 may perform plasticizing synchronously. After plasticizing, the switching valve 115 operates to close the injection passage 1061 and to open the shut off nozzle 116. After the plunger resets, the screw 101 pushes the molten materials so as to feed materials into the storage chamber 110 thereunder, after which it is ready to perform the next injection and a whole cycle is finished.

In the injection apparatuses of the second and third categories, the plasticizing process is not involved in the cycle, i.e., plasticizing and injection are conducted independently Therefore production rate and synchronism are improved. Nevertheless, these apparatuses have disadvantages due to employment of a plunger in the structure. Specifically, clearances may exist between the plunger 105 and flange 106 as well as between piston 108 and sleeve 112, as shown in Fig. 2; and as shown in Fig. 3 there may exist a clearance between plunger 114 and cylinder 113. Furthermore, as the switching valve 115 is forced to rotate 90 degrees so as to control the injection passage or the shut off nozzle to close or open, the highly pressurized molten materials may directly contact with the ambient environment. Therefore the molten materials under high pressure may cause leakage or retention. To reduce leakage to the fullest extent as possible, the plunger and the piston should engage with a higher precision, which necessarily renders manufacture of devices and components more difficult and thus increases the production cost. Furthermore, molten materials may stay within the cylinder for undesirably long time due to stagnation thereof, resulting in decomposition and thus severe degradation of plasticizing.

As mentioned hitherto, the common injection apparatuses of the three categories generally suffer from disadvantages such as low production rate, poor efficiency, material leakage, stagnation, decomposition, and difficulties associated with manufacture of devices and components.

### Brief Summary of the Invention

In order to overcome the problems associated with the prior art, the invention provides an injection apparatus special for the injection molding machine which can solve at least some problems from the prior art.

In the first aspect of the invention, it is proposed an injection apparatus for an injection molding machining, which comprises a flange, a shut off nozzle, a charging cylinder and an injection cylinder connected to the upstream end of the flange in the injection direction, wherein the charging cylinder supplies the molten materials within the charging cylinder into the injection cylinder via the shut off nozzle; the flange is provided therein with an injection passage which interconnects with the injection cylinder such that the injection cylinder is capable of performing injection via the injection passage; and wherein the charging cylinder is provided therein with a charging screw at the front portion of which is provided with a charging shut off head capable of blocking up the inlet of the shut off nozzle; and the injection cylinder is provided with an injection screw. The injection screw is provided with an injection shut off head at the front portion thereof, and the injection shut off head is provided with a shut off ring which not only can block up the outlet of the shut off nozzle but also can allow the molten materials in the injection cylinder to pass therethrough.

According to the second aspect of the invention, in the injection apparatus for an injection molding machining of the first aspect, the charging cylinder is connected to the upstream end of the flange in the charging direction; the shut off nozzle is provided within the flange; and the outlet of the shut off nozzle directly interconnects with the injection passage.

According to the third aspect of the invention, in the injection apparatus for an injection molding machining of the first aspect or the second aspect, the flange includes a charging flange and an injection flange; the charging cylinder is connected at the upstream end of the charging flange in the charging direction; the injection cylinder is connected at the upstream end of the injection flange in the injection direction; the injection passage is provided in the injection flange, and the shut off nozzle is provided in the charging flange and the injection flange; and the outlet of the shut off nozzle directly interconnects with the injection passage.

According to the forth aspect of the invention, in the injection apparatus for an injection molding machining of any aspect from the first to the third aspects, the injection shut off devices comprises a rear shut off assembly provided at the front portion of the injection screw and a front shut off assembly provided at the front portion of the rear shut off assembly, wherein the shut off ring is a front shut offs ring which is provided at the front shut offs assembly.

According to the fifth aspect of the invention, in the injection apparatus for an injection molding machining of any aspect from the first to the forth aspects, the rear shut off assembly comprises a rear shut off head provided at the front portion of the injection screw, a rear shut off washer sleeving over the outer wall of the rear shut off head, and a rear shut off ring sleeving over the rear shut off groove of the rear shut off head; and the front shut offs assembly comprises a front shut off head provided at front of the rear shut off head, a front shut off washer sleeving over the outer wall of the front shut-off head, and a front shut off ring sleeving over the front shut off groove of the front shut off head.

According to the sixth aspect of the invention, in the injection apparatus for an injection molding machining of any aspect from the first to the fifth aspects, the outer diameter of the rear shut off washer is smaller than the inner diameter of the sliding hole for the injection screw, and the outer diameter of the rear shut off ring is identical to the inner diameter of the sliding hole for the injection screw; the outer diameter of the front shut off washer is smaller than the inner diameter of the injection passage, and the outer diameter of the front shut off ring is identical to the inner diameter of the injection passage.

According to the seventh aspect of the invention, in the injection apparatus for an injection molding machining of any aspect from the first to the sixth aspects, the length of the front shut off ring is designated to be larger than or equal to the sum of the sliding distance that is travelled by the front shut off ring from the beginning of pressure-holding to the end of maximum stroke of the injection screw and the length of the outlet of the shut off nozzle in the injection direction.

According to the eighth aspect of the invention, in the injection apparatus for an injection molding machining of any aspect from the first to the seventh aspects, the injection shut off assembly comprises a shut off head provided at the front portion of the injection screw, a shut off washer sleeving over the outer wall of the shut off head, and the shut off ring sleeving over the shut off groove of the shut off head; the inner diameters of injection passage and the injection cylinder are identical, the outer diameter of the shut off washer is smaller than the inner diameter of the injection passage, and the outer diameter of the shut off ring is identical to the inner diameter of the injection passage.

According to the ninth aspect of the invention, in the injection apparatus for an injection molding machining of any aspect from the first to the eighth aspects, the length of the shut off ring is designated to be larger than or equal to the sum of the sliding distance that is travelled by the shut off ring from the beginning of pressure-holding to the end maximum stroke of the injection screw and the length of the outlet of the shut off nozzle in the injection direction.

According to the tenth aspect of the invention, in the injection apparatus for an injection molding machining of any aspect from the first to the ninth aspects, the charging shut off assembly has the same structure as the injection shut off assembly.

According to the eleventh aspect of the invention, in the injection apparatus for an injection molding machining of any aspect from the first to the tenth aspects, the flange comprises a charging flange and an injection flange; the charging cylinder is connected at the upstream end of the charging flange in the charging direction; the injection cylinder is connected at the upstream end of the injection flange in the injection direction; the injection passage is provided in the injection flange, and the charging flange and the injection cylinder are directly connected with each other via a communicating cylinder; the shut off nozzle is located at the charging flange and the connecting cylinder; and the outlet of the shut off nozzle directly interconnects with the injection cylinder.

According to the twelfth aspect of the invention, in the injection apparatus for an injection molding machining of any aspect from the first to the eleventh aspects, the injection shut off assembly comprises a shut off head provided at the front portion of the injection screw, a shut off washer sleeving over the outer wall of the shut off head, and the shut off ring sleeving over the shut off groove of the shut off head; the outer diameter of the shut off washer is smaller than the inner diameter of the sliding hole for the injection screw, and the outer diameter of the shut off ring is identical to the inner diameter of the sliding hole for the injection screw.

According to the thirteenth aspect of the invention, in the injection apparatus for an injection molding machining of any aspect from the first to the twelfth aspects, the length of the shut off ring is designated to be larger than or equal to the sum of the sliding distance that is travelled by the shut off ring from the beginning of pressure-holding to the end of maximum stroke of the injection screw and the length of the outlet of the shut off nozzle in the injection direction.

According to the fourteenth aspect of the invention, in the injection apparatus for an injection molding machining of any aspect from the first to the thirteenth aspects, the charging shut off assembly has the same structure as the injection shut off assembly.

According to the fifteenth aspect of the invention, it is proposed an injection apparatus for an injection molding machine, which comprises a charging flange, an injection flange, a nozzle assembly connected at the front portion of the injection flange, a charging cylinder connected at the rear portion of the charging cylinder, and an injection cylinder connected at the rear portion of the injection flange; the injection apparatus further includes a communicating cylinder which connects the nozzle assembly and the injection cylinder; the injection flange is provided therein with an injection passage which interconnects the nozzle assembly and the injection cylinder, and the communicating cylinder is provided therein with a the shut off nozzle which interconnects the injection cylinder and the charging flange; the charging cylinder and the injection cylinder are provided therein with a charging screw and an injection screw, respectively; the charging screw is provided at the front portion thereof with a charging shut off assembly whose headmost end can block up the inlet of the shut off nozzle; the injection screw is provided with an injection shut off assembly at the front portion thereof; the injection shut off assembly is provided with a shut off ring which not only can block up the outlet of the shut off nozzle, but also can allow the molten materials within the injection cylinder to pass therethrough.

According to the sixteenth aspect of the invention, in the injection apparatus for an injection molding machine of the fifteenth aspect, the injection shut off assembly comprises a shut off head provided at the front portion of the injection screw, a shut off washer sleeving over the outer wall of the shut off head, and the shut off ring sleeving over the shut off groove of the shut off head; the outer diameter of the shut off washer is smaller than the inner diameter of the sliding hole for the injection screw, and the outer diameter of the shut off ring is identical to the inner diameter of the sliding hole for the injection screw.

According to the seventeenth aspect of the invention, in the injection apparatus for an injection molding machine of the fifteenth or sixteenth aspects, the length of the shut off ring is designated to be larger than or equal to the sum of the sliding distance that is travelled by the shut off ring from the beginning of pressure-holding to the end of maximum stroke of the injection screw and the length of the outlet of the shut off nozzle in the injection direction.

According to the eighteenth aspect of the invention, it is proposed an injection apparatus for an injection molding machine, which comprises a flange, a nozzle assembly connected at the front portion of the flange, and a charging cylinder and an injection cylinder connected at the rear portion of the flange, wherein the flange is provided therein with an injection passage which linearly connects the nozzle assembly and the injection cylinder, and a the shut off nozzle which connects the middle portion of the injection passage and the charging cylinder; the charging cylinder and the injection cylinder are provided therein with a charging screw and an injection screw, respectively; the charging screw is provided on the front portion thereof with a charging shut off assembly whose headmost end can block up the inlet of the shut off nozzle; the injection screw is provided with a rear shut off assembly at the front portion thereof; the rear shut off assembly is provided at the front portion thereof with a front shut off assembly which not only can block up the outlet of the shut off nozzle, but also can allow the injecting materials within the injection cylinder to pass therethrough.

According to the nineteenth aspect of the invention, in the injection apparatus for an injection molding machine of the eighteenth aspect, the rear shut off assembly comprises a rear shut off head provided at the front portion of the injection screw, a rear shut off washer sleeving over the outer wall of the rear shut off head, and a rear shut off ring sleeving over the rear shut off groove of rear the shut off head; and the front shut off assembly comprises a front shut off head provided at the front portion of the rear shut off head, a front shut off washer sleeving over the outer wall of the front shut off head, and a front shut off ring sleeving over the front shut off groove of the front shut off head.

According to the twentieth aspect of the invention, in the injection apparatus for an injection molding machine of the nineteenth or twentieth aspect, the outer diameter of the rear shut off washer is smaller than the inner diameter of the sliding hole for the injection screw, and the outer diameter of the rear shut off ring is identical to the inner diameter of the sliding hole for the injection screw; the outer diameter of the front shut off washer is smaller than the inner diameter of the injection passage, and the outer diameter of the front shut off ring is identical to the inner diameter of the injection passage.

According to the twenty-first aspect of the invention, in the injection apparatus for an injection molding machine of the nineteenth or twentieth aspect, the length of the front shut off ring is designated to be larger than or equal to the sum of the sliding distance that is travelled by the front shut off ring from the beginning of pressure-holding to the end of maximum stroke of the injection screw and the length of the outlet of the shut off nozzle in the injection direction.

In the invention, the injection screw is provided at the front thereof with an injection shut off assembly which in turn is provided with a shut off ring which not only can block up the outlet of the shut off nozzle, but also can allow the molten materials within the injection cylinder to pass therethrough, therefore, as compared to the conventional injection apparatuses without employing the structure according to the invention, the molten materials are prevented from contacting with the ambient environment at high pressure and thus leakage is avoided. In addition, a switching valve is dispensed with due to utilizing the shut off ring of the injection shut off assembly to perform pressure holding, therefore problems associated with the switching valve is resolved, such as leakage that would otherwise arise from the clearances between the installation location of switching valve and the ambient environment. Additionally, a double-screw structure is employed in the invention, thus synchronism is improved, the plasticizing period is reduced, and the molding rate and production efficiency are increased. Furthermore, since manufacture precision required for the screws is much lower than that for plungers and pistons, the invention imposes lower requirements on manufacture precision and the production costs can therefore be lowered.

In addition, a technique of employing a communicating cylinder is employed in the invention to interconnect the charging flange and the injection cylinder directly. Thus installation and layout of the whole injection apparatus are convenient and the space at the field can be fully exploited. Therefore, flexibility of deploying the injection apparatus is enhanced.

It should be noted that the invention is by no means limited to the above-mentioned aspects. For example, the skilled in the technical field may, in the light of the invention, combine or modify these aspects without departing from the scope of the invention, provided that structures resulting from these combinations or modifications can realize the purpose of the invention.

### Brief Description of the Drawings

Hereinafter some embodiments of the invention will be further described by way of a non-limiting example with reference to the companying figures, wherein,
Fig. 1 is a structural illustration showing the first injection apparatus in the prior art;
Fig. 2 is a structural illustration showing the second injection apparatus in the prior art;
Fig. 3 is a structural illustration showing the third injection apparatus in the prior art;
Fig. 4 is an enlarged view illustrating the structure of the switching valve of the injection apparatus as shown in Fig. 3;
Fig. 5a is a structural illustration showing an injection apparatus according to an embodiment of the invention;
Fig. 5b shows a variant of the embodiment in which a single shut off is employed;

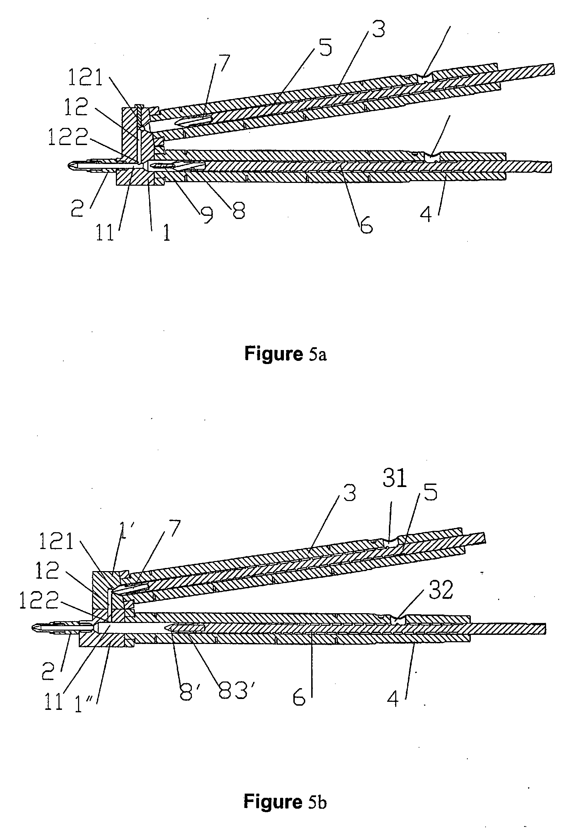

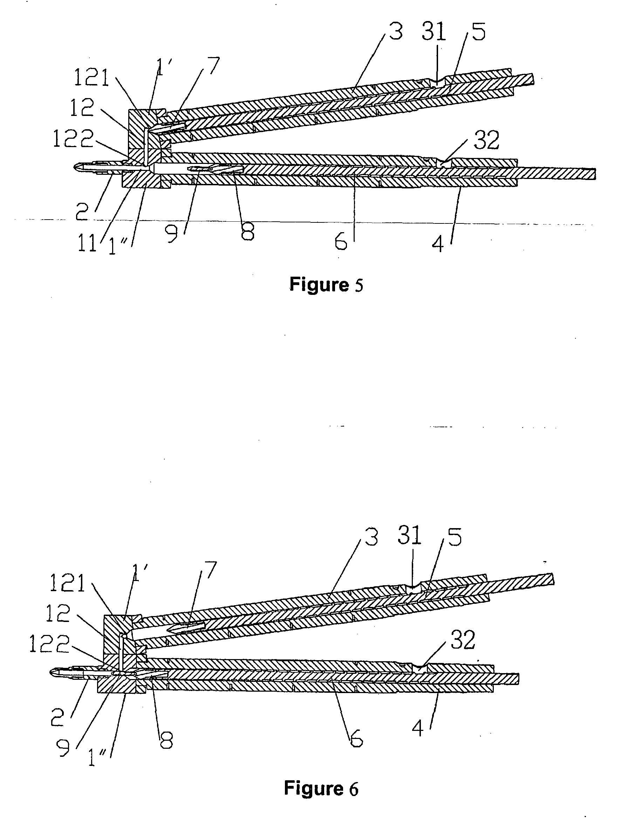

Fig. 5 is a structural illustration of an injection apparatus according to an embodiment of the invention, showing that the injection screw is in a state of injection and the charging screw is in a state of sealing;
Fig. 6 is a structural illustration of an injection apparatus according to an embodiment of the invention, showing that the injection screw is in a state of pressure holding and the charging screw is in a state of plasticizing;

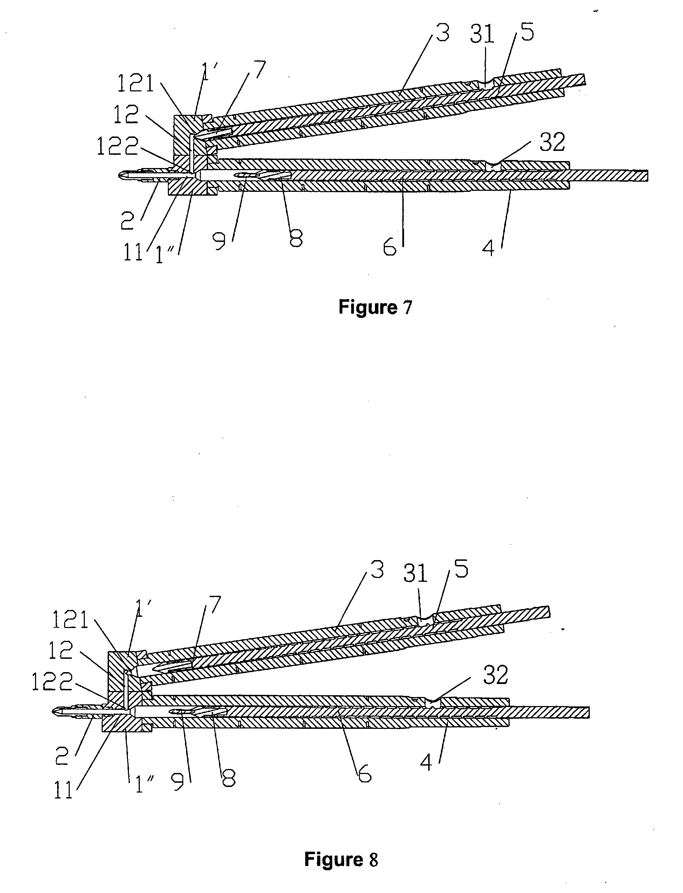

Fig. 7 is a structural illustration of an injection apparatus according to an embodiment of the invention, showing that the injection screw and the charging screw are in a state of plasticizing simultaneously;
Fig. 8 is a structural illustration of an injection apparatus according to an embodiment of the invention, showing a state in which the materials are charged to the injection screw by the charging screw;

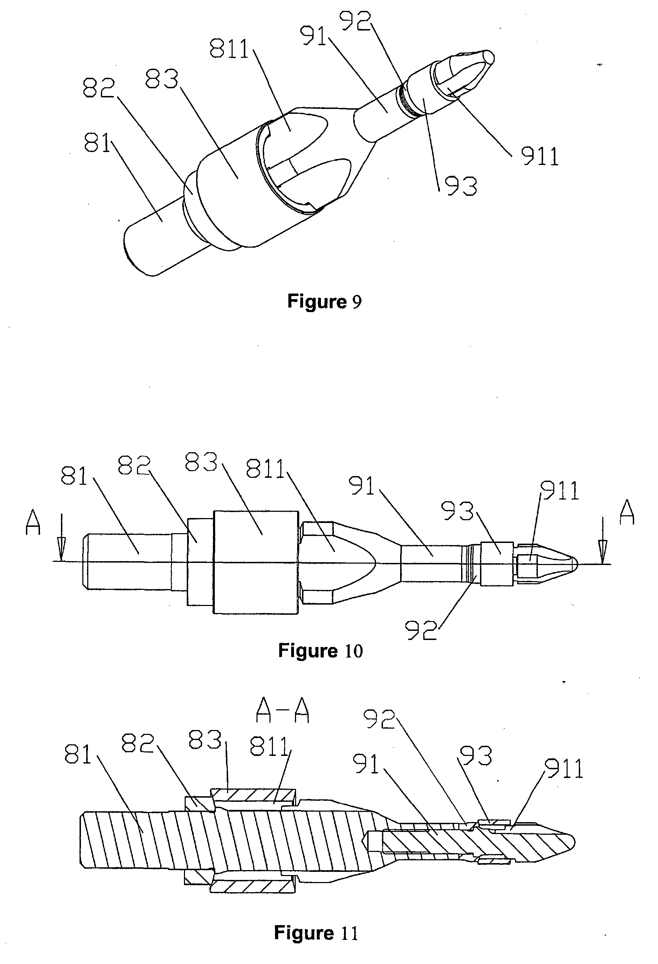

Fig. 9 is a perspective view illustrating the injection shut off assembly, which is located at the front of the injection screw, of an injection apparatus according to an embodiment of the invention;
Fig. 10 is the front view of Fig. 9;
Fig. 11 is the sectional view of Fig. 9;

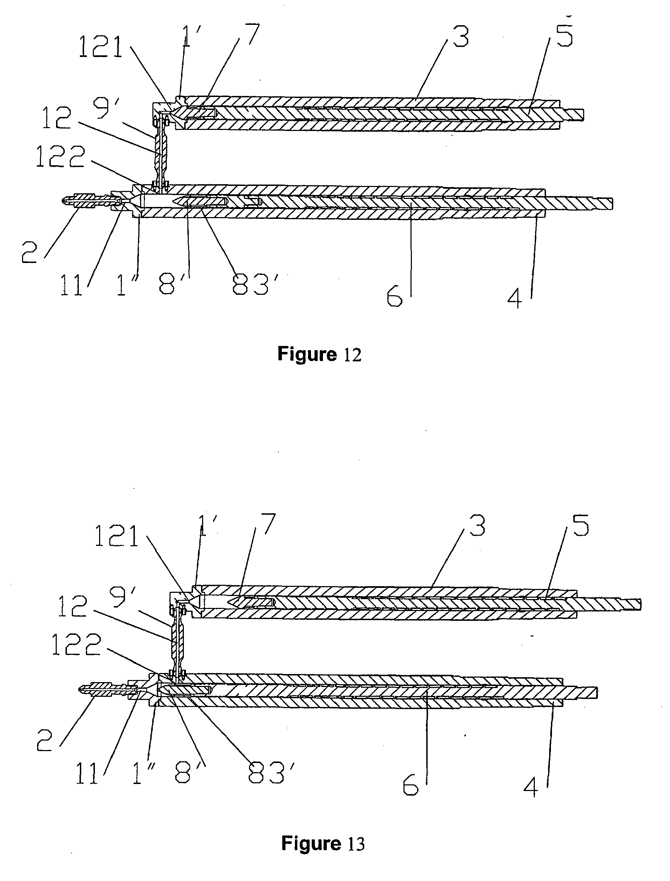

Fig. 12 is a structural illustration of an injection apparatus according to an embodiment of the invention, showing that the injection screw is in a state of injection and the charging screw is in a state of sealing;
Fig. 13 is a structural illustration of an injection apparatus according to an embodiment of the invention, showing that the injection screw is in a state of pressure holding and the charging screw is in a state of plasticizing;

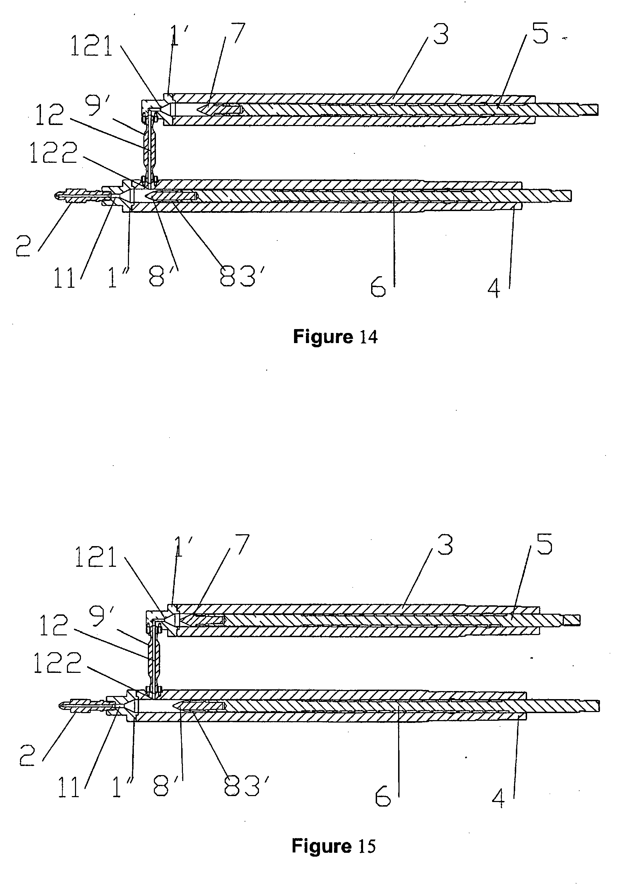

Fig. 14 is a structural illustration of an injection apparatus according to an embodiment of the invention, showing that the injection screw and the charging screw are in a state of plasticizing simultaneously;
Fig. 15 is a structural illustration of an injection apparatus according to an embodiment of the invention, showing a state in which the materials are charged to the injection screw by the charging screw;

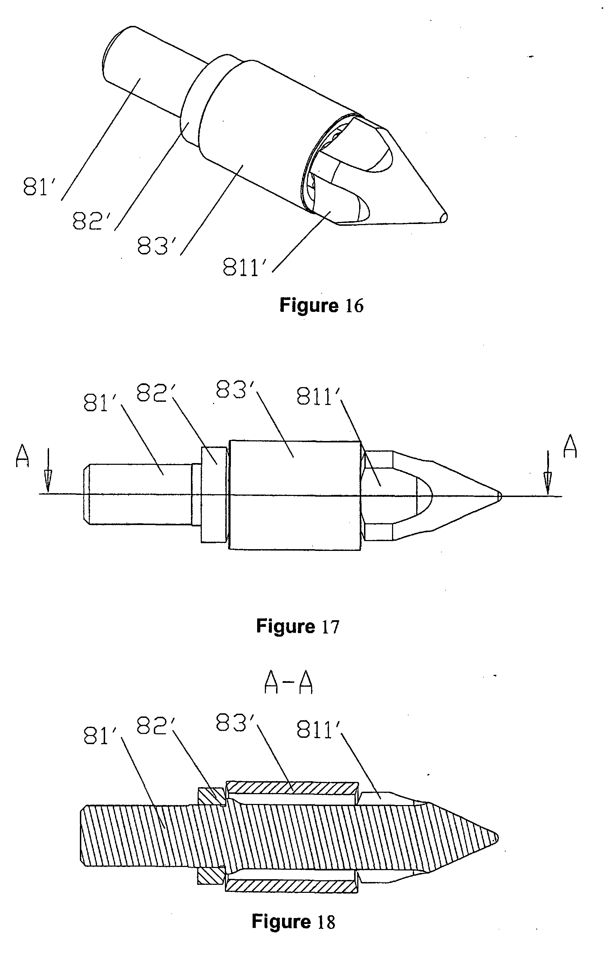

Fig. 16 is a perspective view illustrating the injection shut off assembly, which is located at the front of the injection screw, of an injection apparatus according to an embodiment of the invention;
Fig. 17 is the front view of Fig. 16; and
Fig. 18 is the sectional view of Fig. 16.

### Detailed Description of the Invention

Hereinafter specific exemplary embodiments of the invention will be described by way of non-limiting examples with reference to the accompanying figures. It should be noted that the embodiments of the invention are merely illustrative, and are intended to explain the invention. These embodiments are not intended to limit the invention by any means. In addition, the prior art structures that are known to the skilled in the art will not be described in detail in the description, and only the components or the parts related to the invention will be described.

Fig. 5a is a perspective view illustrating the injection apparatus for an injection molding machine according to an exemplary embodiment of the invention. As shown in Fig. 5a, the injection apparatus includes a flange 1, a nozzle assembly 2 connected at the front portion of the flange 1, and a charging cylinder 3 and an injection cylinder 4 connected at the rear portion of the flange 1. The flange 1 is provided therein with an injection passage 11 which interconnects the nozzle assembly 2 and the injection cylinder 4.

In addition, the flange 1 is further provided with a shut off nozzle 12 which interconnects the middle portion of the injection passage 11 and the charging cylinder 3. The inlet 121 of the shut off nozzle 12 interconnects with the charging cylinder 3, and the outlet 122 of the shut off nozzle 12 interconnects with the middle portion of the injection passage 11. In this way the charging cylinder 3 interconnects with the injection cylinder 4 by means of the shut off nozzle 12 and the injection passage 11. The charging cylinder 3 is provided with a charging screw 5 therein. The charging screw 5 is provided, at the front part thereof, with a charging shut off assembly 7 whose headmost end can block up the inlet 121 of the shut off nozzle 12. The injection cylinder 4 is provided therein with a charging screw 5, at the front portion of which is provided with an injection shut off assembly (8, 9).

In addition, the charging cylinder 3 and the injection cylinder 4 are respectively provided with a charging port 31 and a charging port 32 that are connected to a feeder (not shown in figures).

As shown in Fig. 5a, the injection shut off assembly (8, 9) provided at the front portion of the injection screw 6 may include a rear shut off assembly 8 and a front shut off assembly 9 that is located at front portion of the rear shut off assembly 8. Thus the rear shut off assembly 8 and the front shut off assembly 9 constitute a double shut off assembly for injection. The connection between the front shut off assembly and the rear shut off assembly may be known connection, such as thread connection, a pressure fit connection, etc..

As shown in Figs. 9-11, the rear shut off assembly 8 may include a rear shut off head 81 provided at the front portion of the injection screw 6, a rear shut off washer 82 sleeving over the outer wall of the rear shut off head, and a rear shut off ring 83 sleeving over the rear shut off groove 811 of the rear shut off head. In the present embodiment, the outer diameter of the rear shut off washer 82 is smaller than the diameter of the sliding hole for the injection screw, and the outer diameter of the rear shut off ring 83 is identical to the inner diameter of the sliding hole for the injection screw.

As can be seen from the Fig. 11, the rear shut off ring 82 sleeves at the shoulder (not numbered) of the tail (the left side of the Fig.11) of the rear shut off groove 811. The rear shut off ring 83 sleeves over the rear shut off groove 811 in a way of being capable of moving with respect to the rear shut off head 81. Since the shut off ring 83 is movable relative to the rear shut off ring 81, a clearance may be formed between the rear shut off ring 83 and the rear shut off washer 82 when the rear shut off ring 83 moves forward (the right side of the Fig. 11) with respect to the rear shut off head 81 during the plasticizing process. The molten plastic materials flows to the front shut off head via the clearance and the rear shut off groove 811. During the injection process, the rear shut off ring 83 moves backward (the left side of Fig. 11) to abut against the rear shut off washer 82 due to the counterforce arising from the injection. In this way, a hermetical state is formed between the rear shut off ring 83 and the rear shut off washer 82 such that the molten materials are prevented from reflowing during the injection process.

Similarly, the front shut off assembly 9 may include a front shut off head 91 provided at front portion of the rear shut off head 81, a front shut off washer 92 sleeving over the outer wall of the front shut off head, and a front shut off ring 93 sleeving over the front shut off groove 911 of the front shut off head 91. In the present embodiment, the outer diameter of the front shut off washer 92 is smaller than the aperture of the injection passage 11, and the outer diameter of the front shut off ring 93 is identical to the aperture of the injection passage 11.

In the structure as shown in Fig. 11, the front shut off ring 92 and the rear shut off head 81 are formed in one-piece. However, the invention is not limited to this. For example, the front shut off ring 92 may be formed as a separate component which may then be sleeved over the front shut off head 91. In the front shut off assembly 9, similar to the rear shut off assembly 8, the front shut off ring 92 sleeves at the shoulder (not numbered) of the tail (the left side of the Fig. 11) of the front shut off groove 911. The front shut off ring 93 sleeves over the front shut off groove 911 in a way of being capable of moving with respect to the front shut off head 91. Since the front shut off ring 93 is movable relative to the front shut off head 91, the injection shut off assembly (i.e., the rear shut off assembly 8 and the front shut off assembly 9) is allowed to move forward during the pressure-holding process. At this point, the front shut off ring 93 moves forward (the right side of Fig. 11) with respect to the front shut off head 91 due to the feeding pressure, such that a clearance is formed between the front shut off ring 93 and the front shut off washer 92. Thus the molten plastic materials (the supplement materials) flow through the front shut off head via the clearance and the front shut off groove 811, and in this way material supplementing is realized during the pressure-holding process. After material supplementing is finished, the injection shut off assembly (8, 9) stops moving. At this point the front shut off ring 93 moves backward so as to abut against the front shut off washer 92 under the counterforce of the system pressure. In this way, a hermetical state is formed between the front shut off ring 93 and the front shut off washer 92, and the molten materials are prevented from reflowing during the pressure-holding process.

It should be noted that in the pressure-holding process, the injection shut off assembly (8, 9) does not need to continue to move forward if there is no need to supplement materials. In this case, the front shut off ring 93 abuts against the front shut off washer 92 under the system pressure (pressure-holding pressure) such that a hermetical state is formed between the front shut off ring 93 and the front shut off washer 92 and thus the molten materials are prevented from reflowing.

Fig. 5a and Fig. 5 show the injection apparatus in which the injection screw 6 is in a state of an injection molding and the charging screw 5 is in a sealing state. In the situation as shown in Fig. 5a and Fig. 5, the charging shut off assembly 7 blocks up the inlet 121 of the shut off nozzle 12 so as to perform sealing. At this time, the injection screw 6 supplies the molten materials, which have been fed to the injection cylinder 4 from the charging cylinder 3 via the shut off nozzle 12, to the nozzle assembly 2 through the injection passage 11. In this way the molten materials are injected into the mold cavity. During the injection process, the charging screw 5 blocks up the inlet 121 of the shut off nozzle 12 so as to prevent the molten materials from reflowing.

Specifically, in the injection process, the charging shut off assembly 7 blocks up the inlet 121 of the shut off nozzle 12, and at the same time the molten materials pushed out by the injection screw 6 flow from the rear shut off washer 82 to the rear shut off groove 811 of the rear shut off head 81 and then are injected into the injection passage 11 via the front shut off assembly 9. As mentioned above, the front shut off assembly (specifically, the front shut off ring 93) blocks up the outlet 122 of the shut off nozzle (12) in the pressure-holding process (as shown in Fig. 6) so as to perform pressure-holding over the system. If there is a need to supplement materials, the molten materials required for supplement flow from the outer wall of the front shut off washer 92 to the front shut off groove 911 of the front shut off head 91, and then to the plastic mold. In the other words, the injection screw 6 and the double shut off assembly provided at the front portion thereof may continue to advance if necessary. Thus materials may be supplemented during the pressure-holding process as stated before.

Additionally, the injection screw 6 may perform plasticizing during the injection process.

The operating process of the embodiment will be described in particular with reference to Figs. 5-8. It should be noted that the only difference of the structures in Figs. 5-8 from the structure in Fig. 5a lies in the flange structure, which will be explained hereinafter.

As shown in Fig. 5, the front end of the charging shut off assembly 7 of the charging screw 5 just blocks up the inlet 121 of the shut off nozzle 12 during injection, at which time the injection screw 6 begins to advance forward; and the molten materials within the charging cylinder 3 are advanced along therewith, meanwhile the molten-materials enter the injection passage 11 after passing through the rear shut off assembly 8 and the front shut off assembly 9. Thus the materials can be injected into the plastic mold via the nozzle assembly 2.

As shown in Fig. 6, when the injection screw 6 continues to advance so that the outlet 122 of the shut off nozzle 12 is blocked up by the front shut off assembly 9 (particularly, the front shut off ring 93), the injection screw 6 performs pressure-holding to the plastic mold and if necessary provides materials to be supplement. The charging screw 5 may plasticize some of solid plastics simultaneously when the injection screw 6 carries out pressure- holding.

After performing pressure-holding and supplementing necessary materials, the injection screw 6 may also plasticize some solid plastic as needed, as shown in Fig. 7. In this way, the charging screw 5 and the injection screw 6 may perform plasticizing simultaneously such that the plasticizing time is saved and the plasticizing capacity is enhanced.

At the final stage, the charging screw 5 begins to advance forward such that the molten materials in the charging cylinder 3 are delivered to the injection cylinder 4. Therefore it is ready to carry out injection of a next cycle. The charging process will be finished when a certain amount of molten materials for injection is accumulated. In this way, a full cycle is completed.

It should be noted that the injection screw 6 may not perform plasticizing at all in the above-mentioned injection cycle, and only the charging screw 5 performs plasticizing. The injection screw 6 may only function in the case that the supplied materials from the charging screw 5 is insufficient. In this way the efficiency may be improved further. Nevertheless, the injection screw 6 and the charging screw 5 may function simultaneously, in which case the efficiency of the injection apparatus is maximized.

In the embodiment as shown in Fig. 5a, the flange 1 is of one piece, e.g., as shown in Fig. 3 which illustrates the prior art. Nevertheless, the present invention is by no means limited thereto. For an instance, Fig. 5 illustrates a variant of the embodiment shown in Fig. 5a, wherein the flange 1 includes a charging flange 1' and an injection flange 1".

In this case, the charging cylinder 3 is connected to the rear (the right side of Fig. 5) portion of the charging flange 1', and the injection cylinder 4 is connected to the rear (the right side of Fig. 5) portion of the injection flange 1". The injection passage 11 is provided within the injection flange 1" and interconnects with the injection cylinder 4. A first portion of the shut off nozzle 12 is provided within the charging flange 1'. One end of the first portion functions as the inlet 121 and interconnects with the charging cylinder 3. A second portion of the shut off nozzle 12 is provided within the injection flange 1". One end of the second portion functions as the outlet 122 and interconnects with the injection passage 11. The other ends of the two portions of the shut off nozzle 12 are hermetically connected. As such, as shown in Fig. 8, the charging cylinder 3 may supply the molten materials in the charging cylinder 3 to the injection cylinder 4 via the shut off nozzle 12, such that the molten materials may be injected by the injection cylinder 4 into the nozzle assembly 2 via the injection passage 11, and further are injected into the mold via the nozzle assembly. It should be noted that the hermetical connection between the portion of the shut off nozzle 12 that is located within the charging flange 1' and the portion that is located within the injection flange 1" may be realized through any known techniques in the prior art, such as utilizing sealing slips or bond, or welding, etc..

The operating process associated with the double-flange embodiment as shown in Fig. 5 is identical to that as shown in Fig. 5a, hence is omitted.

In the embodiments as shown in Fig. 5 and Fig. 5a, it is preferred that materials may be supplemented during the pressure-holding process. Therefore, the length of the front shut off ring 93 is preferably designated to be larger than or equal to the sum of the sliding distance that is travelled by the front shut off ring from the beginning of pressure-holding to the end of maximum stroke of the injection screw 6 and the length of the outlet 122 of the shut off nozzle 12 in the injection direction. As such, the nozzle assembly may be supplemented with materials without affecting pressure-holding, and the injection precision is then further improved.

In the embodiments as shown in Fig. 5 and Fig. 5a, a double-shut off assembly (refer to Figs. 9-11) is employed as the injection shut off assembly (8, 9), which double-shut off assembly is constituted by the rear shut off assembly 8 and the front shut off assembly 9. However, the invention is by no means limited thereto. For example, a single-shut off assembly 8' as shown in Figs. 16-18 may be employed as the injection shut off assembly (8'). Fig. 5b shows a variant which employs a single shut off head.

In this case, the injection shut off assembly 8' includes a shut off head 81' provided at the front portion of the injection screw 6, a shut off washer 82' sleeving over the outer wall of the shut off head, and the shut off ring 83' sleeving over the shut off groove 811' of the shut off head. In this variant, the inner diameters of injection passage 11 and the injection cylinder 4 are identical, the outer diameter of the shut off washer 82' is smaller than the inner diameter of the injection passage 11, and the outer diameter of the shut off ring 83' is identical to the inner diameter of the injection passage 11. As such, the molten materials pushed out by the injection screw 6 flow to the rear shut off groove 811" from the shut off washer 81' and are injected into the injection passage during injection; and the shut off ring 83' just blocks up the outlet 122 of the shut off nozzle 12 during pressure-holding so as to perform pressure-holding for the system.

It should be noted that the injection shut off assembly 8' according to the present embodiment is similar to the rear shut off assembly 8 in the double-shut off assembly, except that the injection shut off assembly 8' may perform pressure-holding to the system and supplement materials. The way in which it performs plasticizing and injection process is similar to the way in which the rear shut off assembly 8 does, and therefore is omitted.

In the variant, it is preferred that materials may be supplemented during the pressure-holding process; that is, the injection screw 6 and the injection shut off assembly 8' are allowed to continue to advance forward during the pressure-holding process so as to push the molten materials into the injection passage. Therefore, the length of the shut off ring 83 is preferably designated to be larger than or equal to the sum of the sliding distance that is travelled by the shut off ring from the beginning of pressure-holding to the end of maximum stroke of the injection screw 6 and the length of the outlet 121 of the shut off nozzle 12 in the injection direction. As such, it is ensured that pressure-holding may be continued during the material-supplementing process such that material-supplementing can be carried out during the pressure-holding process.

In the embodiments and the variant thereof, the structure of the charging shut off structure 7 may be and may not be the same as the injection shut off assembly (8, 9; 8'), depending on the specific needs.

Additionally, an injection system composed of the injection screw 6 and the injection shut off assembly (8, 9; 8') is employed in the above embodiments of the invention. However, the invention is not limited thereto. For example, a plunge structure (now shown) may be employed instead of the injection screw 6 and the injection shut off assembly 7. In this case, the front portion of the plunge structure is employed to block up the outlet of the shut off nozzle (12) so as to carry out pressure-holding. However, this structure should be sized such that the inner diameter of the injection cylinder 4 is identical to that of the injection passage 11 and the outer diameter of the plunger is identical to the inner diameter of the injection cylinder 4. Obviously, this structure is not preferred, since high machining precision associated therewith is demanding. Furthermore, since the plunger is substituted for the injection screw and the injection shut off assembly (8, 9; 8'), the injection cylinder 4 cannot perform plasticizing, and the problem survives that a clearance may exist between the plunger and the injection cylinder 4.

Another exemplary embodiment will be described with reference to Figs. 12-15. It should be noted that only the difference between the above-mentioned embodiments and this embodiment will be described, and descriptions with respect to the same or similar structures are omitted. Furthermore, same reference numbers are utilized to designate the same or similar components.

In addition, charging ports 31, 32 of the charging cylinder 3 and the injection cylinder 4 are not shown in Figs. 12-15.

Fig. 12 shows another exemplary embodiment according to the invention. In the embodiment shown in Fig. 12, the flange 1 includes a charging flange 1' and an injection flange 1". The nozzle assembly 2 is connected at the downstream end (the front portion of the injection flange 1", or the left side of Fig. 12) of the injection flange 1" in the injection direction, and the injection cylinder 4 is connected at the upstream end (the rear portion of the injection flange 1", or the right side of Fig. 12) of the injection flange 1" in the injection direction. The injection passage 11 is provided in the injection flange 1", and interconnects with the injection cylinder 4. The charging cylinder 3 is connected to the upstream end (the rear portion of the charging flange 10', or the right side of Fig. 12) of the charging flange 1' in the charging direction. The charging flange 1' directly interconnects with the injection cylinder 4 via a communicating cylinder 9'. In addition, a part of the shut off nozzle 12 is provided in the charging flange 10'. One end of this part functions as the inlet 121 of the shut off nozzle 12, and interconnects with the charging cylinder 3. The charging shut off assembly 7 of the charging screw 5 may block up the inlet 121. Another part of the shut off nozzle 12 is provided in the communicating cylinder 9'. One end of this part functions as the outlet 122 and interconnects with the injection cylinder 4 directly. The other ends of the two parts of the shut off nozzle (12) are hermetically connected. The molten materials in the charging cylinder 3 are directly charged into the injection cylinder 4 via the shut off nozzle 12.

As can be seen, the difference between the structures shown in Fig. 12 and Fig. 5 lies in that fact that a communicating cylinder 9' is employed, due to which the installation of the injection apparatus is greatly simplified and the layout of the charging cylinder 3 and the injection cylinder 4 is facilitated.

In the exemplary embodiment as shown in Fig. 12, the front end of the injection screw 6 is provided with a single shut off assembly, i.e., the injection shut off assembly 8'. The injection shut off assembly (8') includes a shut off head 81' provided at the front portion of the injection screw, a shut off washer 82' sleeving over the outer wall of the shut off head and a shut off ring 83' sleeving over the shut off groove 811' of the shut off head. In the embodiment, the outer diameter of the shut off washer 82 is smaller than the inner diameter of the sliding hole for the injection screw, and the outer diameter of the shut off ring 83 is identical to the inner diameter of the sliding hole for the injection screw. As such, the molten materials pushed out by the injection screw 6 flow through the shut off groove 811' of the shut off head 81' from the shut off washer 82', and then are injected into the injection passage 11. During the pressure-holding process, the shut off ring 83' just blocks up the outlet 122 of the shut off nozzle 12 so as to carry out pressure-holding for the system.

It should be noted that, the injection shut off assembly 8' according to the embodiment is similar to the rear shut off assembly 8 in the double-shut off assembly except that the injection shut off assembly 8' may perform pressure-holding for the system and supplement materials. The way in which it performs plasticizing and injection process is similar to the way in which the rear shut off assembly 8 does, and therefore is omitted.

Preferably, materials may be supplemented during the pressure-holding process; that is, the injection screw 6 and the injection shut off assembly 8' are allowed to continue to advance forward during the pressure-holding process so as to push the molten materials into the injection passage. Therefore, the length of the shut off ring 83' is preferably designated to be larger than or equal to the sum of the sliding distance that is travelled by the shut off ring from the beginning of pressure-holding to the end of maximum stroke of the injection screw 6 and the length of the outlet 121 of the shut off nozzle 12 in the injection direction. As such, it is ensured that pressure-holding may be continued during the material-feeding process such that material-feeding can be carried out during the pressure-holding process.

The embodiment in which the communicating cylinder 9' is directly connected between the charging flange 1' and the injection cylinder 4 is described so far. However the invention is by no means limited thereto. For example, even though not shown in figures, the communicating cylinder 9' may be directly connected between the charging cylinder 3 and the injection cylinder 4. In this case, the shut off nozzle 12 is directly defined within the communicating cylinder 9', with its inlet 121 directly communicating with the charging cylinder 3 and its outlet directly communicating with the injection cylinder 4.

In the embodiments of the invention, the structure in which the injection screw 6 is provided with a single injection shut off assembly (8, 9; 8') at the front portion thereof is described. However, the invention is not limited thereto. For example, a plunge assembly (now shown) may be employed instead of the injection screw 6 and the injection shut off assembly (8, 9; 8'). In this case, the structure should be sized such that the inner diameter of the injection cylinder 4 is identical to that of the injection passage 11. However, this structure is not preferred, since the plunger cannot perform material-supplementing and the problem survives that a clearance may exist between the plunger and the injection cylinder 4.

Additionally, the structure of the charging shut off assembly 7 may be and may not be the same as the injection shut off assembly (8, 9; 8'), depending on the specific needs.

Figs. 13-15 respectively show the injection apparatus according to the embodiment in different stages. These stages correspond to those as shown in Figs. 5-8, and therefore will not be described herein.

Various embodiments have been described hereinto. In the invention, a double-screw structure constituted by a charging screw and an injection screw is employed to perform plasticizing. This improves synchronism, reduces the plasticizing period, and increases the molding rate and production efficiency. Furthermore, since in the invention the hermetic pressure-holding is conducted internally by the injection shut off assembly (8, 9; 8') and the valve structure such as shown in Fig. 3 is not employed, the problem of the clearance between the valve installation location and the ambient environment that would otherwise occur is resolved. Therefore, the molten materials will never contact with the ambient environment at high pressure to the effect that leakage is avoided. Meanwhile, the invention performs injection via injection screws, clearances that would otherwise arise between the plunger and the flange or the cylinders will not exist, thus stagnation will not occur. In this sense, the structure according to the invention is reasonable. As such, plasticizing quality is greatly improved due to absence of leakage and stagnation. Finally, material injecting is implemented through gradually advancing screws. Since manufacture precision required for the screws is much lower than that for plungers and pistons, the invention imposes lower requirements on manufacture precision and the production costs can therefore be lowered.

Even though the invention has been described with reference to the specific embodiments, it should be understood that these embodiments are only illustrative, and will not limit the invention by any means. The skilled in the art can modify and improve the invention in the light of the description of the invention, and the modifications and improvements fall into the scope as defined by the accompanying claims. The scope of the invention is defined by the claims and their equivalents.

## Claims

1. An injection apparatus for an injection molding machine, comprising:
a flange (1; 1', 1"),
a shut off nozzle (12),
a charging cylinder (3); and
an injection cylinder (4) connected to an upstream end of the flange (1; 1', 1") in an injection direction,
wherein the charging cylinder (3) supplies molten materials within the charging cylinder (3) into the injection cylinder (4) via the shut off nozzle (12);
the flange (1; 1', 1") is provided therein with an injection passage (11) which interconnects with the injection cylinder (4) such that the injection cylinder (4) is capable of performing injection via the injection passage (11);
and
wherein the charging cylinder (3) is provided therein with a charging screw (5) at the front portion of which is provided with a charging shut off assembly (7) capable of blocking up an inlet (121) of the shut off nozzle (12);
and
wherein the injection cylinder (4) is provided with an injection screw (6);
**characterized in that** the injection screw (6) is provided with an injection shut off assembly (8, 9; 8') at the front portion thereof, and the injection shut off assembly (8, 9; 8') is provided with a shut off ring (93; 83') which blocks up an outlet (122) of the shut off nozzle (12) and allows the molten materials in the injection cylinder (4) to pass therethrough.

2. The injection apparatus according to claim 1, **characterized in that**, the charging cylinder (3) is connected to the upstream end of the flange (1) in the charging direction; the shut off nozzle (12) is provided within the flange (1); and the outlet (122) of the shut off nozzle (12) directly interconnects with the injection passage (11).

3. The injection apparatus according to claim 1, **characterized in that**, the flange (1) includes a charging flange (1') and an injection flange (1"); the charging cylinder (3) is connected at the upstream end of the charging flange (1') in the charging direction; the injection cylinder (4) is connected at the upstream end of the injection flange (1") in the injection direction; the injection passage (11) is provided in the injection flange (1"), and the shut off nozzle (12) is provided in the charging flange (1') and the injection flange (1"); and the outlet (122) of the shut off nozzle (12) directly interconnects with the injection passage (11).

4. The injection apparatus according to claim 2 or 3, **characterized in that**, the injection shut off assembly (8, 9) comprises a rear shut off assembly (8) provided at the front portion of the injection screw and a front shut off assembly (9) provided at the front portion of the rear shut off structure (8), wherein the shut off ring is a front shut off ring (93) which is provided at the front shut off structure (9).

5. The injection apparatus according to claim 4, **characterized in that**, the rear shut off assembly (8) comprises a rear shut off head (81) provided at the front portion of the injection screw (6), a rear shut off washer (82) sleeving over the outer wall of the rear shut off head, and a rear shut off ring (83) sleeving over the rear shut off groove (811) of rear the shut off head; and the front shut off structure (9) comprises a front shut off head (91) provided at front portion of the rear shut off head (81), a front shut off washer (92) sleeving over the outer wall of the front shut off head, and the front shut off ring (93) sleeving over the front shut off groove (911) of the front shut off head (91) particularly that
the outer diameter of the rear shut off washer (82) is smaller than the inner diameter of the sliding hole for the injection screw (6), and the outer diameter of the rear shut off ring (83) is identical to the inner diameter of the sliding hole for the injection screw (6); the outer diameter of the front shut off washer (92) is smaller than the inner diameter of the injection passage (11), and the outer diameter of the front shut off ring (93) is identical to the inner diameter of the injection passage (11)
and/or particularly that the length of the front shut off ring (93) is designated to be larger than or equal to the sum of the sliding distance that is travelled by the front shut off ring (93) from the beginning of pressure-holding to the end of maximum stroke of the injection screw (6) and the length of the outlet (122) of the shut off nozzle (12) in the injection direction.

6. The injection apparatus according to claim 2 or 3, **characterized in that**, the injection shut off assembly (8') comprises a shut off head (81') provided at the front portion of the injection screw (6), a shut off washer (82') sleeving over the outer wall of the shut off head, and the shut off ring (83') sleeving over the shut off groove (811') of the shut off head; the inner diameters of the injection passage (11) and the injection cylinder (4) are identical, the outer diameter of the shut off washer (82') is smaller than the inner diameter of the injection passage (11), and the outer diameter of the shut off ring (83') is identical to the inner diameter of the injection passage (11).

7. The injection apparatus according to claim 6, **characterized in that**, the length of the shut off ring (83') is designated to be larger than or equal to the sum of the sliding distance that is travelled by the shut off ring (83') from the beginning of pressure-holding to the end of maximum stroke of the injection screw (6) and the length of the outlet (122) of the shut off nozzle (12) in the injection direction.

8. The injection apparatus according to any one of claims 1 to 6, **characterized in that**, the charging shut off structure (7) has the same structure as the injection shut off assembly (8,9; 8').

9. The injection apparatus according to claim 1, **characterized in that**, the flange (1) comprises a charging flange (1') and an injection flange (1"); the charging cylinder (3) is connected at the upstream end of the charging flange (1') in the charging direction; the injection cylinder (4) is connected at the upstream end of the injection flange (1") in the injection direction; the injection passage (11) is provided in the injection flange (1"), and the charging flange (1') and the injection cylinder (4) are directly connected with each other via a communicating cylinder (9); the shut off nozzle (12) is provided in the charging flange (1') and the communicating cylinder (9'); and the outlet (122) of the shut off nozzle (12) directly interconnects with the injection cylinder (4)
particularly that the injection shut off assembly (8') comprises a shut off head (81') provided at the front portion of the injection screw (6), a shut off washer (82') sleeving over the outer wall of the shut off head, and the shut off ring (83') sleeving over the shut off groove (811') of the shut off head; the outer diameter of the shut off washer (82') is smaller than the inner diameter of the sliding hole for the injection screw (6), and the outer diameter of the shut off ring (83') is identical to the inner diameter of the sliding hole for the injection screw(6)
and/or particularly that the length of the shut off ring (83') is designated to be larger than or equal to the sum of the sliding distance that is travelled by the shut off ring (83') from the beginning of pressure-holding to the end of maximum stroke of the injection screw (6) and the length of the outlet (122) of the shut off nozzle (12) in the injection direction.

10. The injection apparatus according to claim 9, **characterized in that**, the charging shut off assembly (7) has the same structure as the injection shut off assembly (8').

11. The injection apparatus according to one of the preceding claims, **characterized in that**, the flange (1; 1', 1") comprising:
a charging flange (1'),
an injection flange (1"), and that the injection apparatus comprising:
a nozzle assembly (2) connected at a front portion of the injection flange (1"),
a charging cylinder (3) connected at a rear portion of the charging flange (1'), and
an injection cylinder (4) connected at a rear portion of the injection flange (1");
a communicating cylinder (9') which connects the charging cylinder (3) and the injection cylinder (4);
the injection flange (1") being provided therein with an injection passage (11) which interconnects the nozzle assembly (2) and the injection cylinder (4), and the communicating cylinder (9) being provided therein with a shut off nozzle (12) which interconnects the injection cylinder (4) and the charging flange (1').

12. The injection apparatus according to claim 11, **characterized in that**, the injection shut off assembly (8) comprises a shut off head (81) provided at the front portion of the injection screw (6), a shut off washer (82) sleeving over the outer wall of the shut off head, and the shut off ring (83) sleeving over the shut off groove (811) of the shut off head; the outer diameter of the shut off washer (82) is smaller than the inner diameter of the sliding hole for the injection screw, and the outer diameter of the shut off ring (83) is identical to the inner diameter of the sliding hole for the injection screw.

13. The injection apparatus according to claim 11 or 12, **characterized in that**, the length of the shut off ring (83) is designated to be larger than or equal to the sum of the sliding distance that is travelled by the shut off ring (83) from the beginning of pressure-holding to the end of maximum stroke of the injection screw (6) and the length of the outlet (122) of the shut off nozzle (12) in the injection direction.

14. The injection apparatus according to one of the preceding claims, **characterized in that**, the injection apparatus comprising:
a flange (1),
an nozzle assembly (2) connected at the front portion of the flange (1), and
a charging cylinder (3), and
an injection cylinder (4) connected at the rear portion of the flange (1);
the flange (1) being provided therein with an injection passage (11) which linearly connects the nozzle assembly (2) and the injection cylinder (4), and
a shut off nozzle (12) which connects the middle portion of the injection passage (11) and the charging cylinder (3).

15. The injection apparatus according to claim 14, **characterized in that**, the rear shut off assembly (8) comprises a rear shut off head (81) provided at the front portion of the injection screw (6), a rear shut off washer (82) sleeving over the outer wall of the rear shut off head, and a rear shut off ring (83) sleeving over the rear shut off groove (811) of rear the shut off head; and the front shut off assembly (9) includes a front shut off head (91) provided at the front portion of the rear shut off head (81), a front shut off washer (92) sleeving over the outer wall of the front shut off head, and a front shut off ring (93) sleeving over the front shut off groove (911) of the front shut off head (91)
particularly that the outer diameter of the rear shut off washer (82) is smaller than the inner diameter of the sliding hole for the injection screw (6), and the outer diameter of the rear shut off ring (83) is identical to the inner diameter of the sliding hole for the injection screw (6); the outer diameter of the front shut off washer (92) is smaller than the inner diameter of the injection passage (11), and the outer diameter of the front shut off ring (93) is identical to the inner diameter of the injection passage (11)
and/or particularly the length of the front shut off ring (93) is designated to be larger than or equal to the sum of the sliding distance that is travelled by the front shut off ring (93) from the beginning of pressure-holding to the end of maximum stroke of the injection screw (6) and the length of the outlet (122) of the shut off nozzle (12) in the injection direction.

## Patentansprüche

1. Spritzvorrichtung für eine Spritzgießmaschine, umfassend:
einen Flansch (1; 1', 1"),
eine Verschlussdüse (12),
einen Beschickungszylinder (3); und
einen Spritzzylinder (4), der mit einem in einer Einspritzrichtung stromaufwärtigen Ende des Flansches (1; 1', 1") verbunden ist,
wobei der Beschickungszylinder (3) geschmolzene Materialien in dem Beschickungszylinder (3) über die Verschlussdüse (12) in den Spritzzylinder (4) zuführt;
wobei der Flansch (1; 1', 1") darin mit einem Einspritzkanal (11) versehen ist,
welcher mit dem Spritzzylinder (4) verbunden ist, derart, dass der Spritzzylinder (4) in der Lage ist, Einspritzen über den Einspritzkanal (11) durchzuführen; und
wobei der Beschickungszylinder (3) darin mit einer Beschickungsschnecke (5) versehen ist, an deren vorderem Abschnitt eine Beschickungsverschlussanordnung (7) vorgesehen ist, die in der Lage ist,
einen Einlass (121) der Verschlussdüse (12) zu verschließen; und
wobei der Spritzzylinder (4) mit einer Einspritzschnecke (6) versehen ist;
**dadurch gekennzeichnet, dass** die Einspritzschnecke (6) an deren vorderem Abschnitt mit einer Einspritzverschlussanordnung (8, 9; 8') versehen ist und die Einspritzverschlussanordnung (8, 9; 8') mit einem Verschlussring (93; 83') versehen ist, der einen Auslass (122) der Verschlussdüse (12) verschließt und
ermöglicht, dass die geschmolzenen Materialien in dem Spritzzylinder (4) dort hindurchtreten können.

2. Spritzvorrichtung nach Anspruch 1, **dadurch gekennzeichnet, dass** der Beschickungszylinder (3) mit dem in der Beschickungsrichtung stromaufwärtigen Ende des Flansches (1) verbunden ist; die Verschlussdüse (12) innerhalb des Flansches (1) vorgesehen ist; und der Auslass (122) der Verschlussdüse (12) direkt mit dem Einspritzkanal (11) verbunden ist.

3. Spritzvorrichtung nach Anspruch 1, **dadurch gekennzeichnet, dass** der Flansch (1) einen Beschickungsflansch (1') und einen Einspritzflansch (1") umfasst; der Beschickungszylinder (3) mit dem in der Beschickungsrichtung stromaufwärtigen Ende des Beschickungsflansches (1') verbunden ist; der Spritzzylinder (4) mit dem in der Einspritzrichtung stromaufwärtigen Ende des Einspritzflansches (1") verbunden ist; der Einspritzkanal (11) in dem Einspritzflansch (1") vorgesehen ist und die Verschlussdüse (12) in dem Beschickungsflansch (1') und dem Einspritzflansch (1") vorgesehen ist; und der Auslass (122) der Verschlussdüse (12) direkt mit dem Einspritzkanal (11) verbunden ist.

4. Spritzvorrichtung nach Anspruch 2 oder 3, **dadurch gekennzeichnet, dass** die Einspritzverschlussanordnung (8, 9) eine hintere Verschlussanordnung (8), die an dem vorderen Abschnitt der Einspritzschnecke vorgesehen ist, und eine vordere Verschlussanordnung (9), die an dem vorderen Abschnitt der hinteren Verschlusskonstruktion (8) vorgesehen ist, umfasst, wobei der Verschlussring ein vorderer Verschlussring (93) ist, welcher an der vorderen Verschlusskonstruktion (9) vorgesehen ist.

5. Spritzvorrichtung nach Anspruch 4, **dadurch gekennzeichnet, dass** die hintere Verschlussanordnung (8) einen hinteren Verschlusskopf (81), der an dem vorderen Abschnitt der Einspritzschnecke (6) vorgesehen ist, eine hintere Verschlussscheibe (82), die manschettenartig über der äußeren Wand des hinteren Verschlusskopfes angeordnet ist, und einen hinteren Verschlussring (83), der manschettenartig über der hinteren Verschlussrille (811) des hinteren Verschlusskopfes angeordnet ist, umfasst; und die vordere Verschlusskonstruktion (9) einen vorderen Verschlusskopf (91), der an dem vorderen Abschnitt des hinteren Verschlusskopfes (81) vorgesehen ist, eine vordere Verschlussscheibe (92), die manschettenartig über der äußeren Wand des vorderen Verschlusskopfes angeordnet ist, und den vorderen Verschlussring (93), der manschettenartig über der vorderen Verschlussrille (911) des vorderen Verschlusskopfes (91) angeordnet ist, umfasst, insbesondere dass
der Außendurchmesser der hinteren Verschlussscheibe (82) kleiner als der Innendurchmesser des Gleitloches für die Einspritzschnecke (6) ist und der Außendurchmesser des hinteren Verschlussringes (83) gleich dem Innendurchmesser des Gleitloches für die Einspritzschnecke (6) ist; der Außendurchmesser der vorderen Verschlussscheibe (92) kleiner als der Innendurchmesser des Einspritzkanals (11) ist und der Außendurchmesser des vorderen Verschlussringes (93) gleich dem Innendurchmesser des Einspritzkanals (11) ist,
und/oder insbesondere, dass die Länge des vorderen Verschlussringes (93) derart ausgelegt ist, dass sie größer gleich der Summe aus der Gleitstrecke, welche durch den vorderen Verschlussring (93) von dem Beginn des Nachdruckvorgangs bis zu dem Ende des maximalen Hubs der Einspritzschnecke (6) zurückgelegt wird, und der Länge des Auslasses (122) der Verschlussdüse (12) in der Einspritzrichtung ist.

6. Spritzvorrichtung nach Anspruch 2 oder 3, **dadurch gekennzeichnet, dass** die Einspritzverschlussanordnung (8') einen Verschlusskopf (81'), der an dem vorderen Abschnitt der Einspritzschnecke (6) vorgesehen ist, eine Verschlussscheibe (82'), die manschettenartig über der äußeren Wand des Verschlusskopfes angeordnet ist, und den Verschlussring (83'), der manschettenartig über der Verschlussrille (811') des Verschlusskopfes angeordnet ist, umfasst; die Innendurchmesser des Einspritzkanals (11) und des Spritzzylinders (4) identisch sind, der Außendurchmesser der Verschlussscheibe (82') kleiner als der Innendurchmesser des Einspritzkanals (11) ist und der Außendurchmesser des Verschlussringes (83') gleich dem Innendurchmesser des Einspritzkanals (11) ist.

7. Spritzvorrichtung nach Anspruch 6, **dadurch gekennzeichnet, dass** die Länge des Verschlussringes (83') derart ausgelegt ist, dass sie größer gleich der Summe aus der Gleitstrecke, welche durch den Verschlussring (83') von dem Beginn des Nachdruckvorgangs bis zu dem Ende des maximalen Hubs der Einspritzschnecke (6) zurückgelegt wird, und der Länge des Auslasses (122) der Verschlussdüse (12) in der Einspritzrichtung ist.

8. Spritzvorrichtung nach einem beliebigen der Ansprüche 1 bis 6, **dadurch gekennzeichnet, dass** die Beschickungsverschlusskonstruktion (7) dieselbe Konstruktion wie die Einspritzverschlussanordnung (8, 9; 8') aufweist.

9. Spritzvorrichtung nach Anspruch 1, **dadurch gekennzeichnet, dass** der Flansch (1) einen Beschickungsflansch (1') und einen Einspritzflansch (1") umfasst; der Beschickungszylinder (3) mit dem in der Beschickungsrichtung stromaufwärtigen Ende des Beschickungsflansches (1') verbunden ist; der Spritzzylinder (4) mit dem in der Einspritzrichtung stromaufwärtigen Ende des Einspritzflansches (1") verbunden ist; der Einspritzkanal (11) in dem Einspritzflansch (1") vorgesehen ist und der Beschickungsflansch (1') und der Spritzzylinder (4) über einen kommunizierenden Zylinder (9) direkt miteinander verbunden sind; die Verschlussdüse (12) in dem Beschickungsflansch (1') und dem kommunizierenden Zylinder (9') vorgesehen ist; und der Auslass (122) der Verschlussdüse (12) direkt mit dem Spritzzylinder (4) verbunden ist,
insbesondere, dass die Einspritzverschlussanordnung (8') einen Verschlusskopf (81') umfasst, der an dem vorderen Abschnitt der Einspritzschnecke (6) vorgesehen ist, eine Verschlussscheibe (82'), die manschettenartig über der äußeren Wand des Verschlusskopfes angeordnet ist, und den Verschlussring (83'), der manschettenartig über der Verschlussrille (811') des Verschlusskopfes angeordnet ist; der Außendurchmesser der Verschlussscheibe (82') kleiner als der Innendurchmesser des Gleitloches für die Einspritzschnecke (6) ist und der Außendurchmesser des Verschlussringes (83') gleich dem Innendurchmesser des Gleitloches für die Einspritzschnecke (6) ist,
und/oder insbesondere, dass die Länge des Verschlussringes (83') derart ausgelegt ist, dass sie größer gleich der Summe aus der Gleitstrecke, welche durch den Verschlussring (83') von dem Beginn des Nachdruckvorgangs bis zu dem Ende des maximalen Hubs der Einspritzschnecke (6) zurückgelegt wird, und der Länge des Auslasses (122) der Verschlussdüse (12) in der Einspritzrichtung ist.

10. Spritzvorrichtung nach Anspruch 9, **dadurch gekennzeichnet, dass** die Beschickungsverschlussanordnung (7) dieselbe Konstruktion wie die Einspritzverschlussanordnung (8') aufweist.

11. Spritzvorrichtung nach einem der vorhergehenden Ansprüche, **dadurch gekennzeichnet, dass** der Flansch (1; 1', 1") umfasst:
einen Beschickungsflansch (1'),
einen Einspritzflansch (1 "), und dass die Spritzvorrichtung umfasst:
eine Düsenanordnung (2), die mit einem vorderen Abschnitt des Einspritzflansches (1") verbunden ist,
einen Beschickungszylinder (3), der mit einem hinteren Abschnitt des Beschickungsflansches (1') verbunden ist, und
einen Spritzzylinder (4), der mit einem hinteren Abschnitt des Einspritzflansches (1") verbunden ist;
einen kommunizierenden Zylinder (9'), der den Beschickungszylinder (3) und den Spritzzylinder (4) verbindet;
wobei der Einspritzflansch (1") darin mit einem Einspritzkanal (11) versehen ist, welcher die Düsenanordnung (2) und den Spritzzylinder (4) miteinander verbindet, und wobei der kommunizierende Zylinder (9) darin mit einer Verschlussdüse (12) versehen ist, welche den Spritzzylinder (4) und den Beschickungsflansch (1') miteinander verbindet.

12. Spritzvorrichtung nach Anspruch 11, **dadurch gekennzeichnet, dass** die Einspritzverschlussanordnung (8) einen Verschlusskopf (81) umfasst, der an dem vorderen Abschnitt der Einspritzschnecke (6) vorgesehen ist, eine Verschlussscheibe (82), die manschettenartig über der äußeren Wand des Verschlusskopfes angeordnet ist, und den Verschlussring (83), der manschettenartig über der Verschlussrille (811) des Verschlusskopfes angeordnet ist; wobei der Außendurchmesser der Verschlussscheibe (82) kleiner als der Innendurchmesser des Gleitloches für die Einspritzschnecke ist und der Außendurchmesser des Verschlussringes (83) gleich dem Innendurchmesser des Gleitloches für die Einspritzschnecke ist.

13. Spritzvorrichtung nach Anspruch 11 oder 12, **dadurch gekennzeichnet, dass** die Länge des Verschlussringes (83) derart ausgelegt ist, dass sie größer gleich der Summe aus der Gleitstrecke, welche durch den Verschlussring (83) von dem Beginn des Nachdruckvorgangs bis zu dem Ende des maximalen Hubs der Einspritzschnecke (6) zurückgelegt wird, und der Länge des Auslasses (122) der Verschlussdüse (12) in der Einspritzrichtung ist.

14. Spritzvorrichtung nach einem der vorhergehenden Ansprüche, **dadurch gekennzeichnet, dass** die Spritzvorrichtung umfasst:
einen Flansch (1),
eine Düsenanordnung (2), die an dem vorderen Abschnitt des Flansches (1) angeschlossen ist, und
einen Beschickungszylinder (3), und
einen Spritzzylinder (4), der an dem hinteren Abschnitt des Flansches (1) angeschlossen ist;
wobei der Flansch (1) darin versehen ist mit einem Einspritzkanal (11), welcher die Düsenanordnung (2) und den Spritzzylinder (4) geradlinig verbindet, und
mit einer Verschlussdüse (12), welche den mittleren Abschnitt des Einspritzkanals (11) und den Beschickungszylinder (3) verbindet.

15. Spritzvorrichtung nach Anspruch 14, **dadurch gekennzeichnet, dass** die hintere Verschlussanordnung (8) einen hinteren Verschlusskopf (81), der an dem vorderen Abschnitt der Einspritzschnecke (6) vorgesehen ist, eine hintere Verschlussscheibe (82), die manschettenartig über der äußeren Wand des hinteren Verschlusskopfes angeordnet ist, und einen hinteren Verschlussring (83), der manschettenartig über der hinteren Verschlussrille (811) des hinteren Verschlusskopfes angeordnet ist, umfasst; und dass die vordere Verschlussanordnung (9) einen vorderen Verschlusskopf (91), der an dem vorderen Abschnitt des hinteren Verschlusskopfes (81) vorgesehen ist, eine vordere Verschlussscheibe (92), die manschettenartig über der äußeren Wand des vorderen Verschlusskopfes angeordnet ist, und einen vorderen Verschlussring (93), der manschettenartig über der vorderen Verschlussrille (911) des vorderen Verschlusskopfes (91) angeordnet ist, umfasst;
insbesondere, dass der Außendurchmesser der hinteren Verschlussscheibe (82) kleiner als der Innendurchmesser des Gleitloches für die Einspritzschnecke (6) ist und der Außendurchmesser des hinteren Verschlussringes (83) gleich dem Innendurchmesser des Gleitloches für die Einspritzschnecke (6) ist; der Außendurchmesser der vorderen Verschlussscheibe (92) kleiner als der Innendurchmesser des Einspritzkanals (11) ist und der Außendurchmesser des vorderen Verschlussringes (93) gleich dem Innendurchmesser des Einspritzkanals (11) ist;
und/oder insbesondere, dass die Länge des vorderen Verschlussringes (93) derart ausgelegt ist, dass sie größer gleich der Summe aus der Gleitstrecke, welche durch den vorderen Verschlussring (93) von dem Beginn des Nachdruckvorgangs bis zu dem Ende des maximalen Hubs der Einspritzschnecke (6) zurückgelegt wird, und der Länge des Auslasses (122) der Verschlussdüse (12) in der Einspritzrichtung ist.

## Revendications

1. Appareillage d'injection pour une machine de moulage par injection, comprenant:
une bride (1 ; 1', 1"),
une buse de fermeture (12),
un cylindre de chargement (3) ; et
un cylindre d'injection (4) relié à une extrémité en amont de la bride (1 ; 1', 1") dans une direction d'injection,
dans lequel le cylindre de chargement (3) fournit de la matière fondue à l'intérieur du cylindre de chargement (3) dans le cylindre d'injection (4) via la buse de fermeture (12) ;
la bride (1 ; 1', 1") est dotée d'un passage d'injection (11) qui s'interconnecte avec le cylindre d'injection (4) de telle sorte que le cylindre d'injection (4) est en mesure d'effectuer l'injection via le passage d'injection (11) ; et
dans lequel le cylindre de chargement (3) est doté d'une vis de chargement (5) à l'intérieur sur la partie avant de laquelle est prévu un montage de fermeture de chargement (7) en mesure de bloquer une entrée (121) de la buse de fermeture (12) ;
et
dans lequel le cylindre d'injection (4) est doté d'une vis d'injection (6) ;
**caractérisé en ce que** la vis d'injection (6) est dotée d'un montage de fermeture d'injection (8, 9 ; 8') sur la partie avant de celle-ci, et le montage de fermeture d'injection (8, 9 ; 8') est doté d'une bague de fermeture (93 ; 83') qui bloque une sortie (122) de la buse de fermeture (12) et permet à la matière fondue dans le cylindre d'injection (4) de passer au travers.

2. Appareillage d'injection selon la revendication 1, **caractérisé en ce que** le cylindre de chargement (3) est raccordé à l'extrémité en amont de la bride (1) dans la direction de chargement ; la buse de fermeture (12) est prévue à l'intérieur de la bride (1) ; et la sortie (122) de la buse de fermeture (12) s'interconnecte directement avec le passage d'injection (11).

3. Appareillage d'injection selon la revendication 1, **caractérisé en ce que** la bride (1) comprend une bride de chargement (1') et une bride d'injection (1") ; le cylindre de chargement (3) est raccordé à l'extrémité en amont de la bride de chargement (1') dans la direction de chargement ; le cylindre d'injection (4) est raccordé à l'extrémité en amont de la bride d'injection (1") dans la direction d'injection ; le passage d'injection (11) est prévu dans la bride d'injection (1 "), et la buse de fermeture (12) est prévue dans la bride de chargement (1') et la bride d'injection (1") ; et la sortie (122) de la buse de fermeture (12) s'interconnecte directement avec le passage d'injection (11).

4. Appareillage d'injection selon la revendication 2 ou 3, **caractérisé en ce que** le montage de fermeture d'injection (8, 9 ; 8') comprend un montage de fermeture arrière (8) prévu sur la partie avant de la vis d'injection et un montage de fermeture avant (9) prévu sur la partie avant de la structure de fermeture arrière (8), sachant que la bague de fermeture est une bague de fermeture avant (93) qui est prévue sur la structure de fermeture avant (9).

5. Appareillage d'injection selon la revendication 4, **caractérisé en ce que** le montage de fermeture arrière (8) comprend une tête de fermeture arrière (81) prévue sur la partie avant de la vis d'injection (6), une rondelle de fermeture arrière (82) enveloppant la paroi extérieure de la tête de fermeture arrière, et une bague de fermeture arrière (83) enveloppant la rainure de fermeture arrière (811) de la tête de fermeture arrière ; et la structure de fermeture avant (9) comprend une tête de fermeture avant (91) prévue sur la partie avant de la tête de fermeture arrière (81), une rondelle de fermeture avant (92) enveloppant la paroi extérieure de la tête de fermeture avant, et la bague de fermeture avant (93) enveloppant la rainure de fermeture avant (911) de la tête de fermeture avant (91) particulièrement **en ce que**
le diamètre extérieur de la rondelle de fermeture arrière (82) est inférieur au diamètre intérieur du trou de glissement pour la vis d'injection (6) et le diamètre extérieur de la bague de fermeture arrière (83) est identique au diamètre intérieur du trou de glissement pour la vis d'injection (6) ; le diamètre extérieur de la rondelle de fermeture avant (92) est inférieur au diamètre intérieur du passage d'injection (11), et le diamètre extérieur de la bague de fermeture avant (93) est identique au diamètre intérieur du passage d'injection (11)
et/ou particulièrement **en ce que** la longueur de la bague de fermeture avant (93) est conçue pour être supérieure ou égale à la somme de la distance de glissement parcourue par la bague de fermeture avant (93) depuis le début du maintien en pression jusqu'à la fin de la course maximale de la vis d'injection (6) et de la longueur de la sortie (122) de la buse de fermeture (12) dans la direction d'injection.

6. Appareillage d'injection selon la revendication 2 ou 3, **caractérisé en ce que** le montage de fermeture d'injection (8') comprend une tête de fermeture (81') prévue sur la partie avant de la vis d'injection (6), une rondelle de fermeture (82') enveloppant la paroi extérieure de la tête de fermeture, et la bague de fermeture (83') enveloppant la rainure de fermeture (811') de la tête de fermeture ; les diamètres intérieurs du passage d'injection (11) et du cylindre d'injection (4) sont identiques, le diamètre extérieur de la rondelle de fermeture (82') est inférieur au diamètre intérieur du passage d'injection (11), et le diamètre extérieur de la bague de fermeture (83') est identique au diamètre intérieur du passage d'injection (11).

7. Appareillage d'injection selon la revendication 6, **caractérisé en ce que** la longueur de la bague de fermeture (83') est conçue pour être supérieure ou égale à la somme de la distance de glissement parcourue par la bague de fermeture (83') depuis le début du maintien en pression jusqu'à la fin de la course maximale de la vis d'injection (6) et de la longueur de la sortie (122) de la buse de fermeture (12) dans la direction d'injection.

8. Appareillage d'injection selon l'une quelconque des revendications 1 à 6, **caractérisé en ce que** la structure de fermeture de chargement (7) présente la même structure que le montage de fermeture d'injection (8, 9 ; 8').

9. Appareillage d'injection selon la revendication 1, **caractérisé en ce que** la bride (1) comprend une bride de chargement (1') et une bride d'injection (1") ; le cylindre de chargement (3) est raccordé à l'extrémité en amont de la bride de chargement (1') dans la direction de chargement ; le cylindre d'injection (4) est raccordé à l'extrémité en amont de la bride d'injection (1") dans la direction d'injection ; le passage d'injection (11) est prévu dans la bride d'injection (1"), et la bride de chargement (1') et le cylindre d'injection (4) sont directement raccordés l'un à l'autre via un cylindre communiquant (9) ; la buse de fermeture (12) est prévue dans la bride de chargement (1') et le cylindre communiquant (9') ; et la sortie (122) de la buse de fermeture (12) s'interconnecte directement avec le cylindre d'injection (4)
particulièrement **en ce que** le montage de fermeture arrière (8') comprend une tête de fermeture (81') prévue sur la partie avant de la vis d'injection (6), une rondelle de fermeture (82') enveloppant la paroi extérieure de la tête de fermeture, et la bague de fermeture (83') enveloppant la rainure de fermeture (811') de la tête de fermeture ; le diamètre extérieur de la rondelle de fermeture (82') est inférieur au diamètre intérieur du trou de glissement pour la vis d'injection (6), et le diamètre extérieur de la bague de fermeture (83') est identique au diamètre intérieur du trou de glissement pour la vis d'injection (6)
et/ou particulièrement **en ce que** la longueur de la bague de fermeture (83') est conçue pour être supérieure ou égale à la somme de la distance de glissement parcourue par la bague de fermeture (83') depuis le début du maintien en pression jusqu'à la fin de la course maximale de la vis d'injection (6) et de la longueur de la sortie (122) de la buse de fermeture (12) dans la direction d'injection.

10. Appareillage d'injection selon la revendication 9, **caractérisé en ce que** le montage de fermeture de chargement (7) présente la même structure que le montage de fermeture d'injection (8').

11. Appareillage d'injection selon l'une quelconque des revendications précédentes, **caractérisé en ce que** la bride (1 ; 1', 1") comprend une bride de chargement (1'),
une bride d'injection (1 "), et que l'appareillage d'injection comprend :
un montage de buse (2) raccordé sur une partie avant de la bride d'injection (1"),
un cylindre de chargement (3) raccordé sur une partie arrière de la bride de chargement (1'), et
un cylindre d'injection (4) raccordé sur une partie arrière de la bride d'injection (1") ;
un cylindre communiquant (9') qui connecte le cylindre de chargement (3) et le cylindre d'injection (4) ;
la bride d'injection (1 ") étant dotée d'un passage d'injection (11) qui interconnecte le montage de buse (2) et le cylindre d'injection (4), et le cylindre communiquant (9) étant doté d'une buse de fermeture (12) à l'intérieur qui interconnecte le cylindre d'injection (4) et la bride de chargement (1').

12. Appareillage d'injection selon la revendication 11, **caractérisé en ce que** le montage de fermeture d'injection (8) comprend une tête de fermeture (81) prévue sur la partie avant de la vis d'injection (6), une rondelle de fermeture (82) enveloppant la paroi extérieure de la tête de fermeture, et la bague de fermeture (83) enveloppant la rainure de fermeture (811) de la tête de fermeture ; le diamètre extérieur de la rondelle de fermeture (82) est inférieur au diamètre intérieur du trou de glissement pour la vis d'injection, et le diamètre extérieur de la bague de fermeture arrière (83) est identique au diamètre intérieur du trou de glissement pour la vis d'injection.

13. Appareillage d'injection selon la revendication 11 ou 12, **caractérisé en ce que** la longueur de la bague de fermeture (83) est conçue pour être supérieure ou égale à la somme de la distance de glissement parcourue par la bague de fermeture (83) depuis le début du maintien en pression jusqu'à la fin de la course maximale de la vis d'injection (6) et de la longueur de la sortie (122) de la buse de fermeture (12) dans la direction d'injection.

14. Appareillage d'injection selon l'une quelconque des revendications précédentes, **caractérisé en ce que** l'appareillage d'injection comprend :
une bride (1),
un montage de buse (2) raccordé sur la partie avant de la bride (1), et
un cylindre de chargement (3), et
un cylindre d'injection (4) raccordé sur la partie arrière de la bride (1) ;
la bride (1) étant dotée d'un passage d'injection (11) qui connecte le montage de buse (2) et le cylindre d'injection (4) de façon linéaire, et
une buse de fermeture (12) qui connecte la partie centrale du passage d'injection (11) et du cylindre de chargement (3).

15. Appareillage d'injection selon la revendication 14, **caractérisé en ce que** le montage de fermeture arrière (8) comprend une tête de fermeture arrière (81) prévue sur la partie avant de la vis d'injection (6), une rondelle de fermeture arrière (82) enveloppant la paroi extérieure de la tête de fermeture arrière, et une bague de fermeture arrière (83) enveloppant la rainure de fermeture arrière (811) de la tête de fermeture arrière ; et le montage de fermeture avant (9) comprend une tête de fermeture avant (91) prévue sur la partie avant de la tête de fermeture arrière (81), une rondelle de fermeture avant (92) enveloppant la paroi extérieure de la tête de fermeture avant, et une bague de fermeture avant (93) enveloppant la rainure de fermeture avant (911) de la tête de fermeture avant (91) particulièrement **en ce que** le diamètre extérieur de la rondelle de fermeture arrière (82) est inférieur au diamètre intérieur du trou de glissement pour la vis d'injection (6), et le diamètre extérieur de la bague de fermeture arrière (83) est identique au diamètre intérieur du trou de glissement pour la vis d'injection (6) ; le diamètre extérieur de la rondelle de fermeture avant (92) est inférieur au diamètre intérieur du passage d'injection (11), et le diamètre extérieur de la bague de fermeture avant (93) est identique au diamètre intérieur du passage d'injection (11)
et/ou particulièrement **en ce que** la longueur de la bague de fermeture avant (93) est conçue pour être supérieure ou égale à la somme de la distance de glissement parcourue par la bague de fermeture avant (93) depuis le début du maintien en pression jusqu'à la fin de la course maximale de la vis d'injection (6) et de la longueur de la sortie (122) de la buse de fermeture (12) dans la direction d'injection.
